# EUROPÄISCHE PATENTSCHRIFT

(11) **EP 4 524 093 B1**
(45) Veröffentlichungstag und Bekanntmachung des Hinweises auf die Patenterteilung: **03.12.2025**
(21) Anmeldenummer: 23197231.6
(22) Anmeldetag: 13.09.2023
(51) Int. Cl.: B67D 9/02, F16L 59/065, F16L 59/153

(54) **VERLADEARM-VORRICHTUNG SOWIE VERFAHREN ZUM UMRÜSTEN EINER VERLADEARM-VORRICHTUNG**
LOADING ARM DEVICE AND METHOD FOR RETROFITTING A LOADING ARM DEVICE
DISPOSITIF DE BRAS DE CHARGEMENT ET PROCÉDÉ DE RÉÉQUIPEMENT D'UN DISPOSITIF DE BRAS DE CHARGEMENT

(43) Veröffentlichungstag der Anmeldung: 19.03.2025
(73) Patentinhaber: SVT GmbH, 58332 Schwelm (DE)
(72) Erfinder: Kistenev, Dmitry, 58332 Schwelm (DE); Stoetzel, Volker, 44369 Dortmund (DE)
(74) Vertreter: dompatent

(56) Entgegenhaltungen:
- EP-A1- 3 670 997
- EP-B1- 2 757 067
- DE-A1- 102019 134 474
- US-A- 3 658 101
- US-A- 3 712 330

## Beschreibung

Die Erfindung betrifft eine Verladearm-Vorrichtung zum Verladen von Flüssigkeiten. Ferner betrifft die Erfindung ein Verfahren zum Umrüsten einer Verladearm-Vorrichtung für das Verladen von hochexplosiven Flüssigkeiten, insbesondere flüssigem Wasserstoff.

Verladearm-Vorrichtungen dienen zum Verfüllen von auf Schiffen vorgesehenen Transporttanks. Übliche Verladearm-Vorrichtungen weisen ein Basiselement auf, das am Boden verankert ist. Mit dem Basiselement ist ein Hauptarm, üblicherweise drehbar verbunden. Mit dem Hauptarm ist sodann ein Außenarm, insbesondere schwenkbar verbunden, wobei der Außenarm mehrteilig ausgebildet sein kann. Die einzelnen Elemente des Außenarms sind hierbei wiederum vorzugsweise gelenkig miteinander verbunden. Vom Hauptarm und vom Außenarm wird ein Führungsschlauch getragen. Durch diesen Führungsschlauch können Fluide zu dem auf dem Schiff vorgesehenen Transporttank transportiert oder aus dem Transporttank abgepumpt werden. Derartige Verladearm-Vorrichtungen sind beispielsweise in EP2757067 B1 beschrieben. Bekannte Verladearm-Vorrichtungen sind jedoch nicht zum Verladen, d.h. zum Transport von flüssigem Wasserstoff geeignet.

Aufgabe der Erfindung ist es eine Verladearm-Vorrichtung zu schaffen, die auch zum Transportieren/ Fördern hochexplosiver, flüssiger Gase wie insbesondere flüssigem Wasserstoff geeignet ist. Ferner ist es Aufgabe der Erfindung, ein Verfahren zum Umrüsten einer Verladearm-Vorrichtung für das Transportieren/ Fördern derartiger hochexplosiver Flüssigkeiten zu schaffen.

Die Lösung der Aufgabe erfolgt erfindungsgemäß durch eine Förderarm-Vorrichtung mit den Merkmalen des Anspruchs 1 sowie durch Verfahren mit den Merkmalen des Anspruchs 13.

Die Verladearm-Vorrichtung weist ein Basiselement auf, das am Boden verankert ist. Mit dem Basiselement ist ein Hauptarm drehbar verbunden. Insbesondere ist eine Drehung um eine vertikale Achse möglich. Zusätzlich kann gegebenenfalls auch ein Verschwenken des Hauptarms um eine insbesondere horizontale Achse möglich sein. Mit dem Hauptarm ist ein Außenarm verbunden. Die Verbindung erfolgt vorzugsweise derart, dass der Außenarm schwenkbar mit dem Hauptarm verbunden ist. Der Außenarm kann mehrere Armelemente aufweisen, die jeweils vorzugsweise wiederum schwenkbar miteinander verbunden sind. Auch ist gegebenenfalls zusätzlich eine drehbare Verbindung der einzelnen Armteile sowie der Verbindung des Außenarms mit dem Hauptarm möglich. Üblicherweise ist insbesondere mit einem freien Ende des Außenarms ein Gegengewicht verbunden. Von dem Hauptarm und dem Außenarm wird ein Führungsschlauch getragen. Dieser Führungsschlauch kann zum Transportieren/ Fördern von Fluiden beispielsweise Ammoniak oder dergleichen genutzt werden, ist jedoch nicht zum Transport von flüssigem Wasserstoff geeignet. Hierbei besteht insbesondere die Problematik, dass der flüssige Wasserstoff bei einer Temperatur von -253°C transportiert werden muss. Beim Kontakt mit Sauerstoff ist Wasserstoff hoch explosiv. Insbesondere muss hierbei berücksichtigt werden, dass aufgrund der extrem niedrigen Transporttemperatur des flüssigen Wasserstoffs sich bei diesen Temperaturen auch Sauerstoff verflüssigen würde. Dies erhöht die Explosionsgefahr.

Erfindungsgemäß weist die Verladearm-Vorrichtung eine innerhalb des Führungsschlauchs angeordnete Schlaucheinrichtung auf. Die Schlaucheinrichtung weist einen Innenschlauch auf, der zum Transport von flüssigen Gasen, insbesondere flüssigem Wasserstoff geeignet ist. Der Innenschlauch ist von einem Außenschlauch umgeben, wobei der Außenschlauch im Wesentlichen konzentrisch zum Innenschlauch angeordnet ist. In dem Zwischenraum zwischen dem Innenschlauch und dem Außenschlauch kann Vakuum angelegt werden. Der so ausgebildete Vakuum-Zwischenraum dient zum Isolieren des Innenschlauchs. Aufgrund des Anlegens von Vakuum an den Vakuum-Zwischenraum ist eine sehr gute Isolation möglich, sodass flüssiger Wasserstoff mit entsprechend niedriger Temperatur transportiert werden kann. Erfindungsgemäß sind an dem Außenschlauch mehrere Manschetten angeordnet. An den Manschetten sind Führungselemente zum Führen und/oder Abstützen der Schlaucheinrichtung in den Führungsschlauch vorgesehen.

Die erfindungsgemäße Verladearm-Vorrichtung weist insbesondere den Vorteil auf, dass ein Umrüsten bestehender Verladearm-Vorrichtungen zum Transportieren/ Fördern hoch explosiver Flüssigkeiten wie flüssigem Wasserstoff möglich ist. Dies ist insofern möglich, da eine bestehende Verladearm-Vorrichtung einen Führungsschlauch aufweist, der zunächst zum Fördern/ Transportieren von Flüssigkeiten, wie Ammoniak oder dergleichen geeignet ist. Zum Umrüsten einer derartigen bestehenden Verladearm-Vorrichtung wird die Schlaucheinrichtung in den Führungsschlauch vorzugsweise eingezogen, wie nachstehend im Detail anhand des erfindungsgemäßen Verfahrens beschrieben.

Die erfindungsgemäße Verladearm-Vorrichtung selbst weist in bevorzugter Ausführungsform eine besonders ausgebildete Schlaucheinrichtung auf, durch die insbesondere ein einfaches Einziehen der Schlaucheinrichtung in den Führungsschlauch möglich ist. Vorzugsweise weist die Schlaucheinrichtung hierbei derart ausgebildete, an den Manschetten vorgesehene Führungselemente auf, dass diese Roll- und/oder Gleitelemente aufweisen. Die Roll- und/oder Gleitelemente sind in einem Abstand zueinander an der Manschette angeordnet und insbesondere in Umfangsrichtung der Manschette gleichmäßig verteilt. Durch derartige Roll- und/oder Gleitelemente ist das Einführen der Schlaucheinrichtungen in den Führungsschlauch auf einfache Weise möglich.

Vorzugsweise weisen zumindest ein Teil, insbesondere alle Führungselemente jeweils zwei Roll- und/oder Gleitelemente auf. Diese sind vorzugsweise jeweils an einem Halteram befestigt. Insbesondere rollt die Befestigung an dem freien Ende des Haltearms, sodass ein Einziehen der Schlaucheinrichtungen im Führungsschlauch die Roll- und/oder Gleitelemente an einer Innenwand des Führungsschlauchs anliegen, bzw. entlang dieser gleiten bzw. abrollen. Die die Roll- und/oder Gleitelemente tragenden Haltearme weisen hierbei einen Winkel von vorzugsweise 45° - 135° zueinander auf. Insbesondere sind die beiden Haltearme fest miteinander verbunden und besonders bevorzugt einstückig ausgebildet. Des Weiteren ist es besonders bevorzugt, dass die Haltearme schwenkbar an der Manschette angeordnet sind. Insbesondere ist ein, vorzugsweise einstückig ausgebildetes Halteelementepaar gemeinsam schwenkbar an der Manschette gehalten. Hierdurch ist es insbesondere möglich beim Einziehen der Schlaucheinrichtungen in den Führungsschlauch auch Biegungen des Führungsschlauches ohne Beschädigungen oder dergleichen zu überwinden. Die Schlaucheinrichtung kann somit ein einen Führungsschlauch eingezogen werden, der weiterhin an dem Hauptarm und Außenarm der Verladearm-Vorrichtung montiert ist. Es muss in bevorzugter Ausführungsform zum Einziehen der Schlaucheinrichtung in den Führungsschlauch der Führungsschlauch nicht demontiert werden. Um eine möglichst gleichmäßige Kraftverteilung zu gewährleisten, ist es bevorzugt, dass am Umfang der Manschette mindestens drei Führungselemente, insbesondere in einem gleichen Abstand zueinander angeordnet sind.

In einer besonders bevorzugten Weiterbildung der Erfindung sind an der mindestens einen Manschette Aufnahmeelemente für Zugseile angeordnet. Hierdurch ist es auf einfache Weise möglich, die Schlaucheinrichtung in den Führungsschlauch einzuziehen, ohne dass zu große Kräfte auf den Innenschlauch oder den Außenschlauch der Schlaucheinrichtung einwirken. Auch können die vorzugsweise mehrere in einem Abstand zueinander angeordneten Manschetten über Zugseile miteinander verbunden werden, um zu gewährleisten, dass die Kraftübertragung beim Einziehen der Schlaucheinrichtung in den Führungsschlauch insbesondere ausschließlich über die Zugseile und die Manschetten erfolgt.

Vorzugsweise sind die Aufnahmeelemente zwischen den Führungselementen an den Manschetten angeordnet. Hierdurch ist beispielsweise das Vorsehen zusätzlicher Manschetten nicht erforderlich.

Insbesondere weist die Schlaucheinrichtung mehrere Manschetten auf, die in einem Abstand von ca. 30cm bis 70cm, insbesondere 40cm bis 60cm zueinander angeordnet sind. Der Schlauch weist hierbei vorzugsweise einen Durchesser von 8" auf.

Der Innenschlauch der Schlaucheinrichtung weist als Material vorzugsweise Edelstahl auf und ist in besonders bevorzugter Ausführungsform aus Edelstahl hergestellt.

Der Außenschlauch der Schlaucheinrichtung weist in bevorzugter Ausführungsform als Material Edelstahl auf und ist insbesondre aus Edelstahl hergestellt.

Zwischen dem Innenschlauch und dem Außenschlauch ist ein Abstand vorgesehen. Dieser ist zur Ausbildung eines insbesondere kreisringförmigen Zwischenraums erforderlich, da in diesem Bereich Vakuum erzeugt wird, um den Innenschlauch zu Isolieren. Hierzu können Abstandshalter wie Einlagen aus Metall, insbesondere Edelstahl vorgesehen sein.

Die vorstehend beschriebene Schlaucheinrichtung stellt insbesondere in den bevorzugten Weiterbildungen eine gesonderte von der Verladearm-Vorrichtung unabhängige Erfindung dar.

Ferner betrifft die Erfindung ein Verfahren zum Umrüsten einer Verladearm-Vorrichtung für das Verladen, d.h. für das Fördern/ Transportieren von hochexplosiven Fluiden, insbesondere flüssigem Wasserstoff. Hierzu wird in einem Führungsschlauch, der von einem Verladearm-Vorrichtung, insbesondere einem Hauptarm und einem Außenarm getragen wird, eine Schlaucheinrichtung eingezogen. Wie vorstehend anhand der Verladearm-Vorrichtung beschrieben, weist die Schlaucheinrichtung einen Innenschlauch auf, der von einem Außenschlauch umgeben ist, wobei zwischen dem Innenschlauch und dem Außenschlauch ein Vakuum-Zwischenraum ausgebildet ist. Ferner weist die Schlaucheinrichtung mehrere den Außenschlauch umgebende Manschetten auf, an denen Führungselemente angeordnet sind. Gemäß dem erfindungsgemäßen Verfahren ist es insofern möglich, die Schlaucheinrichtung in den vorhandenen Führungsschlauch einzuziehen. Hierbei ist es bevorzugt, dass die Führungselemente an der Innenwand des Führungsschlauches anliegen. Insbesondere weisen die Führungselemente Roll- und/oder Gleitelemente auf, die beim Einziehen der Schlaucheinrichtung in den Führungsschlauch an der Innenwand des Führungsschlauchs gleiten und/oder Abrollen.

Vorzugsweise erfolgt gemäß des erfindungsgemäßen Verfahrens zum Umrüsten einer Verladearm-Vorrichtung das Verwenden der Schlaucheinrichtung wie vorstehend insbesondere in bevorzugten Weiterbildungen beschrieben.

Beim Verwenden einer Schlaucheinrichtung in bevorzugter Ausführungsform in der an der mindestens einen Manschette Aufnahmeelemente für Zugseile angeordnet sind, erfolgt gemäß des erfindungsgemäßen Verfahrens ein Befestigen mindestens eines Zugseils an den Aufnahmeelementen, um sodann die Schlaucheinrichtung in den Führungsschlauch einzuziehen. Da die Manschette in bevorzugter Ausführungsform mehrere Aufnahmeelemente aufweist, können vorzugsweise mehrere Zugseile zum Einziehen der Schlaucheinrichtung im Führungsschlauch verwendet werden. Da in einer weiteren bevorzugten Ausführungsform mehrere Manschetten in Längsrichtung der Schlaucheinrichtung vorgesehen sind, ist es insbesondere bevorzugt zur Vermeidung einer zu großen Belastung des Innenschlauchs oder des Außenschlauchs beim Einziehen die Aufnahmeelemente benachbarter Manschetten mit Zugseilen zu verbinden.

Des Weiteren ist es bevorzugt, dass der zwischen dem Außenschlauch der Schlaucheinrichtung und dem Führungsschlauch entstehende Zwischenraum genutzt wird. Zunächst hat dieser Zwischenraum den Vorteil, dass eine weitere Isolierung gewährleistet ist. Vorzugsweise ist es möglich, den Zwischenraum zur Entgasung zu nutzen. Sollten geringfügige Mengen an Wasserstoff, beispielsweise an Verbindungsteilen austreten, kann dieser unmittelbar über den Zwischenraum abgesaugt werden.

Gegebenenfalls kann es zur Vorbereitung des Führungsschlauchs erforderlich sein, dass dieser umgerüstet werden muss, um insbesondere zum Abführen gasförmigen Wasserstoffs geeignet zu sein. Beispielsweise können vorgesehene Verbindungselemente, Drehgelenke oder dergleichen ausgetauscht und durch Schlauchelemente ersetzt werden.

Mit dem erfindungsgemäßen Verfahren zum Umrüsten einer Verladearm-Vorrichtung ist es insbesondere möglich, in einen Führungsschlauch, der ggf. eine Länge von mehr als 10m aufweist, eine Schlaucheinrichtung einzuziehen und somit auf einfache Weise eine bestehende Verladearm-Vorrichtung für das Verladen von hochexplosivem Fluid, insbesondere flüssigem Wasserstoff umzurüsten.

Besonders bevorzugt ist es, das in dem Vakuum-Zwischenraum der Schlaucheinrichtung herrschende Vakuum, insbesondere ununterbrochen zu kontrollieren. Dies hat den großen Vorteil, dass, sollte aus dem Innenschlauch ein Fluid, insbesondere flüssiger Wasserstoff austreten, dies unmittelbar detektiert wird. Es ist sodann möglich, den Wasserstofftransport zu unterbrechen und den Innenschlauch beispielsweise mit Stickstoff zu inertisieren.

Nachfolgend wird die Erfindung anhand einer bevorzugten Ausführungsform unter Bezugnahme auf die anliegenden Zeichnungen näher erläutert.

Es zeigen:
- Figur 1: eine schematische Seitenansicht einer Verladearm-Vorrichtung,
- Figur 2: eine schematische perspektivische Ansicht einer in einen Führungsschlauch einzuziehenden Schlaucheinrichtung und
- Figur 3: eine Schnittansicht durch einen Führungsschlauch der Verladearm-Vorrichtung mit eingezogener Schlaucheinrichtung.

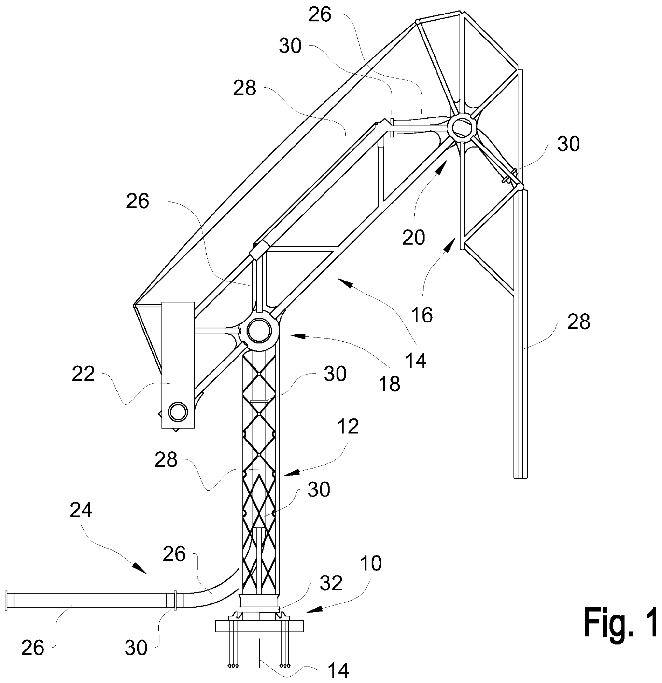

Ein Verladearm, wie er beispielsweise in Figur 1 dargestellt ist, weist ein Basiselement 10 auf. Dieses ist im Boden verankert. Mit dem Basiselement 10 ist ein Hauptarm 12 verbunden. Dieser ist im dargestellten Ausführungsbeispiel als vertikaler Hauptarm ausgebildet. Der Hauptarm ist im dargestellten Ausführungsbeispiel drehbar mit dem Basiselement 10 verbunden, wobei die Drehung um eine in Längsrichtung des Hauptarms verlaufende vertikale Achse 14 erfolgt.

Mit dem Hauptarm 12 ist ein Außenarm 14, 16 verbunden. Der Außenarm 14, 16 weist im dargestellten Ausführungsbeispiel zwei Armteile 14 und 16 auf. Der Armteil 14 des Außenarms ist über ein Gelenk 18 schwenkbar mit dem Hauptarm 12 verbunden. Die Schwenkachse verläuft hierbei horizontal bzw. senkrecht zur Zeichenebene der Figur 1.

Der Armteil 16 des Außenarms ist über ein weiteres Gelenk 20 schwenkbar mit dem Armteil 14 verbunden, wobei die Schwenkachse wiederum horizontal bzw. senkrecht zur Zeichenebene verläuft. An dem freien Ende des Armteils 14 des Außenarms ist ein Gegengewicht 22 angeordnet.

Ein Führungsschlauch 24 ist von dem Hauptarm 12 sowie von dem Außenarm 14, 16 getragen. Im dargestellten Ausführungsbeispiel weist der Führungsschlauch 24 mehrere flexible Schlauchelemente 26 auf. Ferner weist der Führungsschlauch 24 mehrere als Rohre ausgebildete starre Schlauchelemente 28 auf. Die einzelnen Schlauchelemente 26, 28 sind über Flansche 30 miteinander verbunden.

Mit einer derartigen Verladearm-Vorrichtung ist es möglich über den Führungsschlauch Flüssigkeiten oder Gase, wie beispielsweise Ammoniak zu verladen, d.h. einen auf einem Schiff vorgesehen Transporttank zu entnehmen oder diesen zu befüllen.

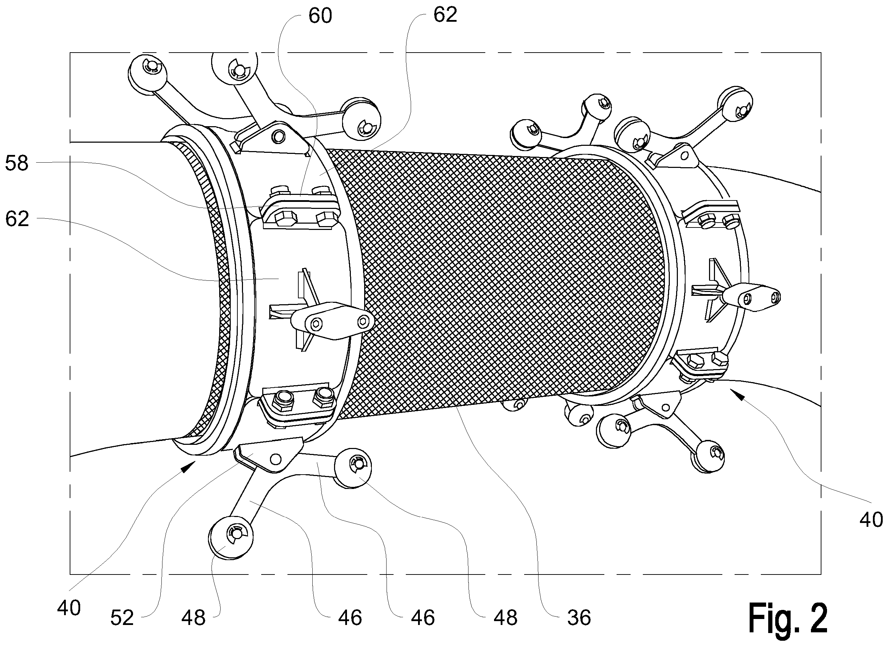

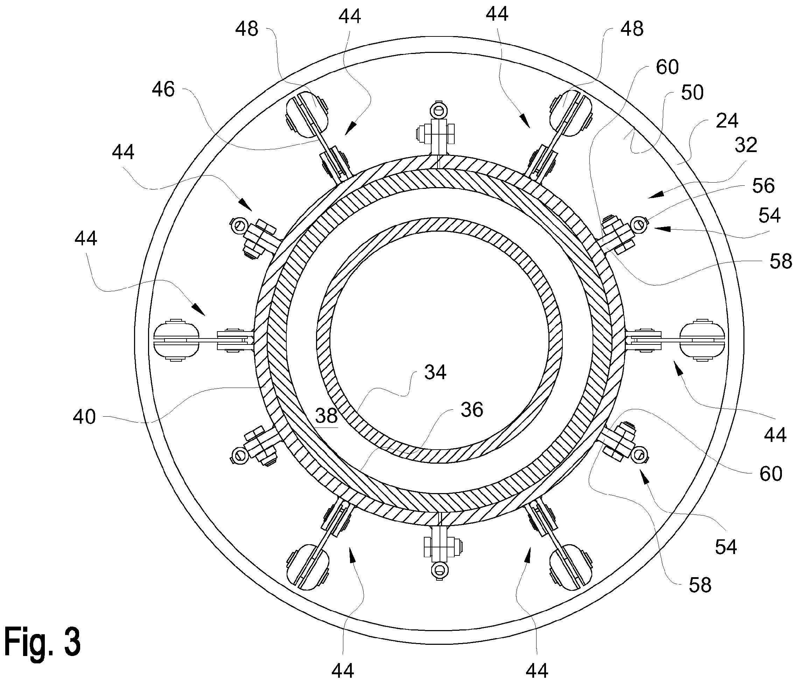

Um eine Verladearm-Vorrichtung, wie sie beispielsweise in Figur 2 dargestellt ist, auch zum Verladen von hochexplosiven Fluiden, wie insbesondere flüssigem Wasserstoff nutzen zu können, wird gemäß der Erfindung in den Führungsschlauch 24 eine Schlaucheinrichtung, wie sie nachfolgend insbesondere anhand der Figuren 2 und 3 beschrieben wird, eingezogen.

Innerhalb des Führungsschlauchs 24 (Figur 3) ist die Schlaucheinrichtung 32 angeordnet bzw. eingezogen.

Die Schlaucheinrichtung 32 weist einen Innenschlauch 34 auf. Der Innenschlauch 34 verläuft in Figur 3 senkrecht zur Zeichenebene. Durch diesen kann flüssiger Wasserstoff geleitet werden. Konzentrisch zum Innenschlauch 34 ist ein Außenschlauch 36 vorgesehen. Zwischen dem Innenschlauch 34 und dem Außenschlauch 36 ist somit ein sich in Längsrichtung erstreckender rohrförmiger Hohlraum mit ringförmigem Querschnitt ausgebildet. Hierbei handelt es sich um einen Vakuum-Zwischenraum 38. Dieser wird zur Erzeugung von Vakuum mit einer Vakuumpumpe verbunden. Das im Vakuum-Zwischenraum 38 herrschende Vakuum dient zur Isolation des den flüssigen Wasserstoff transportierenden Innenschlauchs 34.

Der Außenschlauch 36 ist von mehreren Manschetten 40 umgeben. Zwischen den Manschetten 40 und dem Außenschlauch 36 ist ein Zwischenring 42 angeordnet, wobei es sich um einen gesonderten Ring oder um einen Teil der Manschette 40 handeln kann. Zwischen den Manschetten 40 ist der Außenschlauch 36 angeordnet, wobei der Außenschlauch 36 in bevorzugter Ausführungsform, wie in Figur 2 dargestellt, ein Gitternetz oder dergleichen aufweist, sodass bei hoher Stabilität eine gute Flexibilität gewährleistet ist.

An den Manschetten 40 sind Führungselemente 44 vorgesehen, die bei eingezogener Schlaucheinrichtung zwischen den Manschetten 40 und dem Führungsschlauch angeordnet sind.

Im dargestellten Ausführungsbeispiel sind sechs Führungselemente 44 regelmäßig am Umfang der Manschette 40 angeordnet. Jedes Führungselement 44 weist im dargestellten Ausführungsbeispiel zwei Haltearme 46 (Figur 2) auf, wobei die Haltearme 46 im dargestellten Ausführungsbeispiel einstückig ausgebildet sind.

Die Haltearme 46 weisen hierbei zueinander einen Winkel von 45°-135° auf. An den Enden der Haltearme 46 sind jeweils Rollelemente 48 vorgesehen. Beim Einziehen der Schlaucheinrichtung 32 in den Führungsschlauch 34 rollen die Rollelemente 48 an einer Innenwand 50 des Führungsschlauchs (Figur 3). Die im dargestellten Ausführungsbeispiel einstückig ausgebildeten Haltearm-Paare 46 sind über Befestigungselemente 52 schwenkbar mit der Manschette verbunden. Die Schwenkrichtung ist hierbei im Wesentlichen in Längsrichtung des Führungsschlauchs 24 ausgerichtet.

Zwischen den Führungselementen 44 sind Aufnahmeelemente 54 angeordnet. Im dargestellten Ausführungsbeispiel sind ebenfalls sechs Aufnahmeelemente 54 im gleichen Abstand zueinander jeweils zwischen Benachbarten Führungselementen 44 angeordnet. Die Aufnahmeelemente 54 weisen zum Verbinden mit Zugseilen oder dergleichen Verbindungsösen 56 oder andere Verbindungselemente auf.

Im dargestellten Ausführungsbeispiel sind die Aufnahmeelemente an Verbindungslaschen 58, 60 vorgesehen. Die Verbindungslaschen 58, 60 dienen zum Verbinden benachbarter ringsegmentförmiger Teile 62 (Figur 2) der Manschette 40.

## Patentansprüche

1. Verladearm-Vorrichtung zum Transportieren/ Fördern von Fluiden, mit einem Basiselement (10),
einem drehbar mit dem Basiselement (10) verbundenen Hauptarm (12), einem mit dem Hauptarm (12) schwenkbar verbundenen Außenarm (14, 16),
einer vom Hauptarm (10) und vom Außenarm (14, 16) getragenen Führungsschlauch (24), **gekennzeichnet durch**
einer in dem Führungsschlauch (24) angeordneten Schlaucheinrichtung, mit
einem Innenschlauch (34), insbesondere zum Transportieren/Fördern flüssiger Gase, insbesondere flüssigen Wasserstoffs,
einem den Innenschlauch (34) im Wesentlichen konzentrisch umgebenden Außenschlauch (36),
einem zwischen dem Innenschlauch (34) und dem Außenschlauch (36) ausgebildeten Vakuum-Zwischenraum (38), in dem zur thermischen Isolierung des Innenschlauchs (34) ein Vakuum anlegbar ist, mehrere den Außenschlauch (36) umgebende Manschetten (40) und an den Manschetten (40) angeordnete Führungselemente (44) zum Führen und/oder Abstützen der Schlaucheinrichtung in dem Führungsschlauch.

2. Verladearm-Vorrichtung nach Anspruch 1, **dadurch gekennzeichnet, dass** die Führungselemente (44) Roll- und/oder Gleitelemente (48) aufweisen, die in einem Abstand zur Manschette (40) angeordnet sind.

3. Verladearm-Vorrichtung nach Anspruch 1 oder 2, **dadurch gekennzeichnet, dass** zumindest ein Teil, insbesondere alle Führungselemente (44) jeweils zwei Roll- und/ oder Gleitelemente aufweisen.

4. Verladearm-Vorrichtung nach Anspruch 3, **dadurch gekennzeichnet, dass** zwei Roll- und/oder Gleitelemente (48) jeweils an einem Haltearm (46) befestigt sind, wobei die Haltearme (46) einen Winkel zueinander aufweisen, der vorzugsweise in einem Bereich von 45° bis 135° liegt.

5. Verladearm-Vorrichtung nach Anspruch 4, **dadurch gekennzeichnet, dass** die beiden Haltearme (46) fest miteinander verbunden, insbesondere einstückig ausgebildet sind.

6. Verladearm-Vorrichtung, nach Anspruch 4 oder 5, **dadurch gekennzeichnet, dass** die beiden Haltearme (46) schwenkbar, insbesondere gemeinsam schwenkbar, an der Manschette (40) angeordnet sind.

7. Verladearm-Vorrichtung nach einem der Ansprüche 1 bis 6, **dadurch gekennzeichnet, dass** am Umfang der Manschette (40) mindestens drei Führungselemente (44), insbesondere mit gleichem Abstand zueinander angeordnet sind.

8. Verladearm-Vorrichtung nach einem der Ansprüche 1 bis 7, **dadurch gekennzeichnet, dass** an der Manschette (40) Aufnahmeelemente (54) für Zugseile angeordnet sind.

9. Verladearm-Vorrichtung nach Anspruch 8, **dadurch gekennzeichnet, dass** die Aufnahmeelemente (54) zwischen Führungselementen (44) angeordnet sind, wobei die Anzahl der Aufnahmeelemente (54) vorzugsweise gleich der Anzahl der Führungselemente (44) ist.

10. Verladearm-Vorrichtung nach einem der Ansprüche 1 bis 9, **dadurch gekennzeichnet, dass** der Innenschlauch (34) Edelstahl aufweist.

11. Verladearm-Vorrichtung nach einem der Ansprüche 1 bis 10, **dadurch gekennzeichnet, dass** der Außenschlauch (36) Edelstahl aufweist.

12. Verladearm-Vorrichtung nach einem der Ansprüche 1 bis 11, **dadurch gekennzeichnet, dass** zwischen dem Innenschlauch (34) und dem Außenschlauch (36) Abstandshalter/ ein Abstandsgewebe vorgesehen ist.

13. Verfahren zum Umrüsten einer Verladearm-Vorrichtung für das Transportieren/ Fördern von hochexplosiven Fluiden, insbesondere flüssigem Wasserstoff,
bei welchem in einem Führungsschlauch (24), der von der Verladearm-Vorrichtung, insbesondere einem Hauptarm (10) und einem Außenarm (14, 16) der Verladearm-Vorrichtung getragen wird, eine Schlaucheinrichtung eingezogen wird ,
wobei die Schlaucheinrichtung einem Innenschlauch (34), insbesondere zum Transportieren/Fördern flüssiger Gase, insbesondere flüssigen Wasserstoffs, einem den Innenschlauch (34) im Wesentlichen konzentrisch umgebenden Außenschlauch, einem zwischen dem Innenschlauch (34) und dem Außenschlauch (36) ausgebildeten Vakuum-Zwischenraum (38), in dem zur thermischen Isolierung des Innenschlauchs (34) ein Vakuum anlegbar ist, mehrere den Außenschlauch (36) umgebende Manschetten (40) und an den Manschetten (40) angeordnete Führungselemente (44) zum Führen und/oder Abstützen der Schlaucheinrichtung in dem Führungsschlauch aufweist.

14. Verfahren zum Umrüsten einer Verladearm-Vorrichtung nach Anspruch 13, bei welchem vor dem Einziehen der Schlaucheinrichtung (32) der Führungsschlauch (24) zum Führen von Gasen, insbesondere gasförmigem Wasserstoff umgerüstet wird, wobei insbesondere Gelenke und dergleichen des Führungsschlauchs (24) durch Schlauchelemente ersetzt werden.

15. Verfahren zum Umrüsten einer Verladearm-Vorrichtung nach Anspruch 13 oder 14, wobei beim Einziehen die Führungselemente (44) entlang einer Innenwand (50) des Führungsschlauchs (24) gleiten und/oder abrollen.

16. Verfahren zum Umrüsten einer Verladearm-Vorrichtung nach einem der Ansprüche 13 bis 15, bei welchem die Schlaucheinrichtung (32) entsprechend der Ansprüche 2 bis 12 ausgebildet ist.

17. Verfahren zum Umrüsten einer Verladearm-Vorrichtung nach Anspruch 16, bei welchem zum Einziehen der Schlaucheinrichtung (32) an den an der Manschette (40) angeordneten Aufnahmeelementen (54) Zugseile angebracht werden.

18. Verfahren zum Umrüsten einer Verladearm-Vorrichtung nach einem der Ansprüche 13 bis 17, bei welchem ein zwischen dem Führungsschlauch (24) und dem Außenschlauch (36) der Schlaucheinrichtung (32) entstehender Zwischenraum zur Entgasung genutzt wird.

## Claims

1. Loading arm device for transporting/conveying fluids, comprising
a base element (10),
a main arm (12) rotatably connected with the base element (10),
an outer arm (14, 16) pivotally connected with the main arm (12),
a guide hose (24) supported by the main arm (10) and the outer arm (14, 16),
**characterized by**
a hose means arranged inside the guide hose (24), comprising
an inner hose (34), in particular for transporting/conveying liquid gases, in particular liquid hydrogen,
an outer hose (36) surrounding the inner hose (34) in a substantially concentric manner,
a vacuum gap (38) formed between the inner hose (34) and the outer hose (36), in which a vacuum can be applied for thermal insulation of the inner hose (34),
a plurality of sleeves (40) surrounding the outer hose (36), and guide elements (44) arranged on the sleeves (40) for guiding and/or supporting the hose means in the guide hose.

2. Loading arm according to claim 1, **characterized in that** the guide elements (44) comprise rolling and/or sliding elements (48) arranged at a distance from the sleeve (40).

3. Loading arm device according to claim 1 or 2, **characterized in that** at least a part, in particular all guide elements (44) each have two rolling and/or sliding elements.

4. Loading arm device according to claim 3, **characterized in that** two rolling and/or sliding elements (48) are fastened to one holding arm (46), respectively, the holding arms (46) being at an angle with respect to one another which preferably is in a range from 45° to 135°.

5. Loading arm device according to claim 4, **characterized in that** the two holding arms (46) are fixedly connected with each other, in particular formed integrally.

6. Loading arm device according to claim 4 or 5, **characterized in that** the two holding arms (46) are pivotally arranged on the sleeve (40), in particular in a jointly pivotable manner.

7. Loading arm device according to any one of claims 1 to 6, **characterized in that** at least three guide elements (44) are arranged at the circumference of the sleeve (40), in particular equidistantly.

8. Loading arm device according to any one of claims 1 to 7, **characterized in that** receiving elements (54) for pull cables are arranged on the sleeve (40).

9. Loading arm device according to claim 8, **characterized in that** the receiving elements (54) are arranged between guide elements (44), the number of receiving elements (54) preferably being equal to the number of guide elements (44).

10. Loading arm device according to any one of claims 1 to 9, **characterized in that** the inner hose (34) comprises stainless steel.

11. Loading arm device according to any one of claims 1 to 10, **characterized in that** the outer hose (36) comprises stainless steel.

12. Loading arm device according to any one of claims 1 to 11, **characterized in that** spacers/a spacer fabric is provided between the inner hose (34) and the outer hose (36).

13. Method for retrofitting a loading arm device for transporting/conveying of highly explosive fluids, in particular liquid hydrogen,
wherein a hose means is drawn into a guide hose (24) which is supported by the loading arm device, in particular a main arm (10) and an outer arm (14, 16) of the loading arm device,
wherein the hose means comprises an inner hose (34), in particular for transporting/conveying liquid gases, in particular liquid hydrogen, an outer hose surrounding the inner hose (34) in a substantially concentric manner, a vacuum gap (38) formed between the inner hose (34) and the outer hose (36), in which gap a vacuum may be applied for thermal insulation of the inner hose (34), a plurality of sleeves (40) surrounding the outer hose (36) and guide elements (44) arranged on the sleeves (40) for guiding and/or supporting the hose means in the guide hose.

14. Method for retrofitting a loading arm according to claim 13, wherein prior to drawing in the hose means (32), the guide hose (24) is retrofitted for guiding gases, in particular liquid hydrogen, wherein in particular hinges and the like of the guide hose (24) are replaced with hose elements.

15. Method for retrofitting a loading arm according to claim 13 or 14, wherein during the pull-in operation, the guide elements (44) slide and/or roll along an inner wall (50) of the guide hose (24).

16. Method for retrofitting a loading arm according to any one of claims 13 to 15, wherein the hose means (32) is configured according to claims 2 to 12.

17. Method for retrofitting a loading arm according to claim 16, wherein for pulling in the hose means (32), pull cables are fastened at the receiving elements (54) arranged on the sleeve (40).

18. Method for retrofitting a loading arm according to any one of claims 13 to 17, wherein a gap formed between the guide hose (24) and the outer hose (36) of the hose means (32) is used for degassing.

## Revendications

1. Dispositif de bras de chargement pour transporter/convoyer des fluides, avec un élément de base (10),
un bras principal (12) relié de façon rotative à l'élément de base (10),
un bras extérieur (14, 16) relié au bras principal (12) de façon pivotante,
un tuyau de guidage (24) porté par le bras principal (10) et le bras extérieur (14, 16), **caractérisé par** un agencement de tuyau disposé dans le tuyau de guidage (24) avec
un tuyau intérieur (34), notamment pour transporter/convoyer des gaz liquides, notamment de l'hydrogène liquide,
un tuyau extérieur (36) entourant le tuyau intérieur (34) de façon sensiblement concentrique,
un espace sous vide (38) formé entre le tuyau intérieur (34) et le tuyau extérieur (36), dans lequel un vide peut être créé pour obtenir l'isolation thermique du tuyau intérieur (34),
plusieurs manchettes (40) entourant le tuyau extérieur (36) et des éléments de guidage (44) disposés aux manchettes (40) pour guider et/ou soutenir l'agencement de tuyau dans le tuyau de guidage.

2. Dispositif de bras de chargement selon la revendication 1, **caractérisé en ce que** les éléments de guidage (44) comprennent des éléments de roulage et/ou de glissage (48) qui sont disposés à une distance de la manchette (40).

3. Dispositif de bras de chargement selon la revendication 1 ou 2, **caractérisé en ce qu'**au moins une partie, notamment tous les éléments de guidage (44), comprennent chacun deux éléments de roulage et/ou glissage.

4. Dispositif de bras de chargement selon la revendication 3, **caractérisé en ce que** deux éléments de roulage et/ou de glissage (48) sont fixés à un bras de maintien (46) respectif, les bras de maintien (46) formant entre eux un angle qui est, de préférence, dans la plage de 45° à 135°.

5. Dispositif de bras de chargement selon la revendication 4, **caractérisé en ce que** les deux bras de maintien (46) sont reliés l'un à l'autre et, de préférence, sont formés en une seule pièce.

6. Dispositif de bras de chargement selon la revendication 4 ou 5, **caractérisé en ce que** les deux bras de maintien (46) sont disposés à la manchette (40) de façon pivotante, notamment de façon pivotant ensemble.

7. Dispositif de bras de chargement selon l'une des revendications 1 à 6, **caractérisé en ce que**, sur le pourtour de la manchette (40), au moins trois éléments de guidage (44) sont disposés, notamment à des distances égales les uns par rapport aux autres.

8. Dispositif de bras de chargement selon l'une des revendications 1 à 7, **caractérisé en ce que** des éléments de réception (54) pour des câbles de traction sont disposés sur la manchette (40).

9. Dispositif de bras de chargement selon la revendication 8, **caractérisé en ce que** les éléments de réception (54) sont disposés entre des éléments de guidage (44), le nombre d'éléments de réception (54) étant, de préférence, égal au nombre des éléments de guidage (44).

10. Dispositif de bras de chargement selon l'une des revendications 1 à 9, **caractérisé en ce que** le tuyau intérieur (34) comprend de l'acier inoxydable.

11. Dispositif de bras de chargement selon l'une des revendications 1 à 10, **caractérisé en ce que** le tuyau extérieur (36) comprend de l'acier inoxydable.

12. Dispositif de bras de chargement selon l'une des revendications 1 à 11, **caractérisé en ce que**, entre le tuyau intérieur (34) et le tuyau extérieur (36), des écarteurs / un tissu d'écartement sont/est prévu(s).

13. Procédé de rééquipement d'un dispositif de bras de chargement pour transporter/convoyer des gaz liquides, notamment de l'hydrogène liquide,
selon lequel un dispositif de tuyau est introduit dans un tuyau de guidage (24) qui est porté par le dispositif de bras de chargement, notamment d'un bras principal (10) et d'un bras extérieur (14, 16) du dispositif de bras de chargement,
le dispositif de tuyau comprenant un tuyau intérieur (34), notamment pour transporter/convoyer des gaz liquides, notamment de l'hydrogène liquide, un tuyau extérieur entourant le tuyau intérieur (34) de façon sensiblement concentrique, un espace sous vide (38) formé entre le tuyau intérieur (34) et le tuyau extérieur (36), dans lequel un vide peut être crée pour obtenir l'isolation thermique du tuyau intérieur (34), plusieurs manchettes (40) entourant le tuyau extérieur (36) et des éléments de guidage (44) disposés aux manchettes (40) pour guider et/ou soutenir l'agencement de tuyau dans le tuyau de guidage.

14. Procédé de rééquipement d'un dispositif de bras de chargement selon la revendication 13, selon lequel, avant d'insérer le dispositif de tuyau (32), le tuyau de guidage (24) est modifié pour transporter des gazes, notamment de l'hydrogène sous forme gazeuse, notamment des articulations et semblables du tuyau de guidage (24), sont remplacés par des éléments de tuyau.

15. Procédé de rééquipement d'un dispositif de bras de chargement selon la revendication 13 ou 14, les éléments de guidage (44) glissant et/ou déroulant le long d'une paroi intérieure (50) du tuyau de guidage (24) lors de l'insertion.

16. Procédé de rééquipement d'un dispositif de bras de chargement selon l'une des revendications 13 à 15, selon lequel le dispositif de tuyau (32) est configuré selon l'une des revendications 2 à 12.

17. Procédé de rééquipement d'un dispositif de bras de chargement selon la revendication 16, selon lequel, lors de l'insertion du dispositif de tuyau (32), des cordes de traction sont montées sur les éléments de réception (54) disposés à la manchette (40).

18. Procédé de rééquipement d'un dispositif de bras de chargement selon l'une des revendications 13 à 17, selon lequel un espace se formant entre le tuyau de guidage (24) et le tuyau extérieur (36) du dispositif de tuyau (32) est utilisé pour un dégazage.
